Europäisches Patentamt

European Patent Office

Office européen des brevets

(19)

(11) Numéro de publication : **0 211 776**
**B1**

(12)

# FASCICULE DE BREVET EUROPÉEN

(45) Date de publication du fascicule du brevet :
**11.01.89**

(21) Numéro de dépôt : **86420165.2**

(22) Date de dépôt : **25.06.86**

(51) Int. Cl.⁴ : **B 23 Q   3/154**

(54) **Plateau magnétique à aimants permanents, avec commande marche-arrêt.**

(30) Priorité : **03.07.85 FR 8510682**

(43) Date de publication de la demande :
**25.02.87 Bulletin 87/09**

(45) Mention de la délivrance du brevet :
**11.01.89 Bulletin 89/02**

(84) Etats contractants désignés :
**AT BE CH DE GB IT LI LU NL SE**

(56) Documents cités :
**DE--A-- 2 404 546**
**DE--A-- 2 423 453**
**DE--B-- 1 179 653**
**FR--A-- 2 288 380**
**FR--A-- 2 528 223**
**FR--A-- 2 536 321**
**US--A-- 1 414 522**

(73) Titulaire : **BRAILLON & CIE Société Anonyme**
**17,19 avenue de la Gare**
**F-73800 Montmelian (FR)**

(72) Inventeur : **Braillon, Philibert Maurice**
**19 avenue de la Gare**
**F-73800 Montmélian (FR)**

(74) Mandataire : **Bratel, Gérard et al**
**Cabinet GERMAIN & MAUREAU B.P. 3011**
**F-69392 Lyon Cedex 03 (FR)**

Jouve, 18, rue St-Denis, 75001 Paris, France

EP 0 211 776 B1

## Description

La présente invention concerne un plateau magnétique à aimants permanents, avec commande marche-arrêt, comprenant au-dessus d'une semelle un ensemble de pièces polaires et d'entrefers apparaissant à la surface du plateau, un ensemble d'aimants permanents fixes aimantés dans une direction commune, et un ensemble d'aimants permanents mobiles aimantés perpendiculairement aux précédents un mécanisme de commande étant prévu pour déplacer en translation l'ensemble des aimants mobiles sur la longueur du pas des pièces polaires, entre une position dans laquelle chaque pièce polaire reçoit sur ses faces des polarités d'aimants de noms opposés, et une autre position dans laquelle chaque pièce polaire reçoit sur ses faces des polarités d'aimants tous de même nom, faisant de chaque pièce polaire un pôle actif Nord ou Sud.

Un tel plateau magnétique est notamment utilisable pour le maintien de pièces à usiner, sur des machines-outils. Dans la première position, les lignes de force résultant de tous les aimants permanents se referment par l'intérieur du plateau ainsi rendu inactif. Dans la seconde position, dite position de marche, les lignes de force issues de tous les aimants se referment par l'extérieur du plateau ; l'ensemble de tous les aimants permanents crée alors, sur au moins une face active du plateau, une force d'attraction apte à retenir des pièces métalliques appliquées contre cette face. Ce genre de plateau magnétique, dans lequel la direction d'aimantation des aimants permanents mobiles est perpendiculaire à la direction d'aimantation des aimants permanents fixes, est déjà connu par les documents FR-A-2 017 322 et FR-A-2 536 321.

Dans les plateaux magnétiques de ce genre actuellement connus, les pièces polaires et les entrefers réalisent un fractionnement de la face active du plateau uniquement dans le sens longitudinal étant donné que chaque pièce polaire et chaque entrefer s'étend transversalement sur toute la largeur du plateau magnétique. Il en résulte que la tenue par attraction des pièces posées sur le plateau est bonne dans une direction privilégiée, mais mauvaise dans la direction perpendiculaire à la précédente.

On connaît par ailleurs par le document US-A-1 414 522, en particulier Figure 1, un plateau électromagnétique avec des pièces polaires fixes disposées en damier ou en quadrillage, suivant des rangées longitudinales et transversales, ces pièces polaires étant séparées les unes des autres par des entrefers amagnétiques et formant, en fonctionnement, des pôles alternativement Nord et Sud. Le plateau selon ce document comporte des électro-aimants fixes, tous solidaires de la semelle, chaque électro-aimant étant disposé sous l'une des pièces polaires et étant, en fonctionnement, aimanté perpendiculairement à la semelle. Ainsi, la structure interne de ce plateau ne fournit aucun enseignement applicable à la constitution d'un plateau magnétique à aimants permanents, nécessitant une commutation mécanique.

Le but de la présente invention est de fournir un plateau magnétique à aimants permanents du genre indiqué en introduction qui, tout en conservant une réalisation relativement simple et économique, possède un circuit magnétique agencé de manière à produire une attraction magnétique parfaitement répartie sur toute la face active du plateau, et agissant avec la même efficacité dans la direction longitudinale et dans la direction transversale.

A cet effet, dans le plateau magnétique à aimants permanents selon l'invention :

a) les pièces polaires, toutes fixes, sont disposées en damier ou en quadrillage suivant des rangées longitudinales et transversales, séparées les unes des autres par les entrefers ;

b) des aimants permanents formant un premier ensemble sont insérés sous les entrefers entre les pièces polaires situées en vis-à-vis et appartenant à deux rangées transversales voisines tous ces aimants permanents étant aimantés suivant la direction longitudinale du plateau magnétique avec alternance de leurs polarités aussi bien longitudinalement que transversalement ;

c) d'autres aimants permanents formant un second ensemble sont insérés sous les entrefers entre les pièces polaires situées en vis-à-vis et appartenant à deux rangées longitudinales voisines, tous ces autres aimants permanents étant aimantés suivant la direction transversale du plateau magnétique, également avec une alternance de leur polarités aussi bien longitudinalement que transversalement ;

d) les aimants permanents sont aimantés parallèlement à la semelle.

Ainsi, le plateau magnétique à aimants permanents selon l'invention a sa face active divisée aussi bien longitudinalement que transversalement par les entrefers, et en position de marche cette surface présente des rangées longitudinales, et des rangées transversales de pièces polaires formant des pôles de polarités alternées ; le champ magnétique d'attraction est en conséquence, réparti de façon régulière sur toute la face active, et la tenue des pièces posées sur le plateau est aussi bonne dans la direction longitudinale que dans la direction transversale, ce qui est particulièrement avantageux dans les applications au maintien de pièces à usiner par un outil, auquel cas le déplacement de l'outil est possible aussi bien longitudinalement que transversalement dans les mêmes conditions de tenue de la pièce. De plus, le plateau magnétique possède une densité d'aimants élevée, contribuant à l'obtention d'un excellent rendement, et une épaisseur réduite puisque tous les aimants, longitudinaux et transversaux, sont aimantés parallèlement à la semelle et peuvent être disposés en une couche unique située entre la semelle et les entrefers.

Dans une forme de réalisation de ce plateau magnétique à aimants permanents, la semelle est réalisée en un matériau amagnétique et toutes les pièces polaires disposées en damier ou en quadrillage, reposent directement sur la semelle amagnétique, sans risque de court-circuitage du flux magnétique. Dans une variante la semelle est réalisée en un matériau magnétique et toutes les pièces polaires qui, en position de marche, forment des pôles actifs de même nom reposent directement sur la semelle magnétique, tandis que toutes les autres pièces polaires, formant en position de marche des pôles actifs de nom opposé aux précédents, sont isolées magnétiquement de la semelle ce qui évite le court-circuitage du flux magnétique dans la position de marche.

Dans tous les cas, les pièces polaires ont la forme de simples blocs parallélépipédiques, obtenus et montés économiquement. Avantageusement les aimants permanents insérés entre les rangées longitudinales et transversales de pièces polaires sont des aimants permanents en forme de pastilles circulaires, de faible épaisseur, dont les axes sont parallèles à la semelle. De tels aimants, possédant les caractéristiques magnétiques requises et appartenant notamment à la catégorie « cobalt-terres rares », sont disponibles dans le commerce et peuvent être utilisés directement sans aucun usinage, ce qui contribue à abaisser le prix de revient du plateau magnétique.

De préférence, ceux des aimants permanents en forme de pastilles circulaires qui forment l'ensemble d'aimants permanents mobiles sont portés par des peignes mobiles en matériau amagnétique, logés et montés coulissants dans des lames d'air ménagées sous les entrefers, entre les rangées longitudinales ou transversales de pièces polaires, tous les peignes étant liés au mécanisme de commande de manière à être déplacés simultanément au moyen de ce mécanisme. Les peignes ne nécessitent pas d'être liés directement les uns aux autres pour occuper à tout moment des positions correspondantes ; ils peuvent être couplés uniquement par l'intermédiaire du mécanisme de commande, lequel comprend par exemple un arbre rotatif pourvu de moyens de manœuvre et portant des dentures de pignon en prise avec des crémaillères formées à une extrémité des différents peignes.

De toute façon, l'invention sera mieux comprise à l'aide de la description qui suit, en référence au dessin schématique annexé représentant, à titre d'exemples non limitatifs, une forme de réalisation de ce plateau magnétique à aimants permanents, ainsi qu'une variante :

Figure 1 est une vue en plan par dessus d'un plateau magnétique à aimants permanents conforme à la présente invention, avec semelle amagnétique ;

Figure 2 est une vue en élévation du plateau magnétique de figure 1 ;

Figure 3 est une vue en coupe longitudinale verticale de ce plateau magnétique suivant III-III de figure 1, en position d'arrêt ;

Figure 4 est une vue en coupe longitudinale verticale similaire à figure 3, mais montrant le plateau magnétique en position de marche ;

Figure 5 est une vue en coupe transversale de ce plateau magnétique, suivant V-V de figure 3, en position d'arrêt ;

Figure 6 est une vue en coupe transversale similaire à figure 5, mais correspondant à la position de marche ;

Figure 7 en est une vue en coupe horizontale, suivant VII-VII de figure 3, en position d'arrêt ;

Figure 8 est une vue en coupe horizontale similaire à figure 7 mais en position de marche ;

Figure 9 est une vue partielle, en coupe longitudinale verticale, d'une variante de ce plateau magnétique avec semelle magnétique.

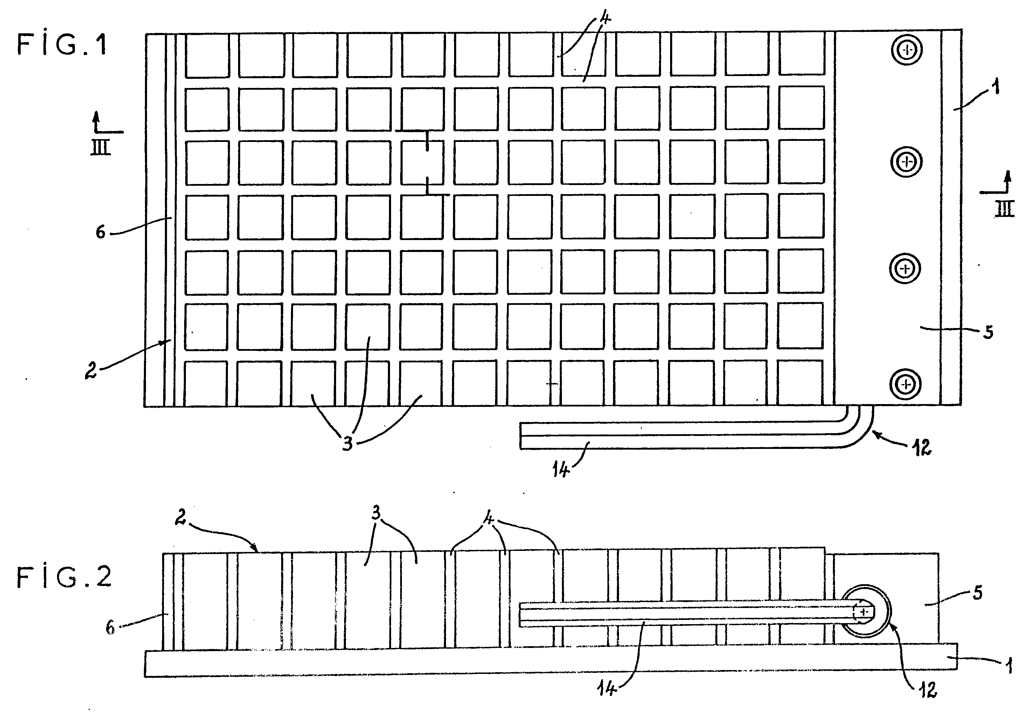

Le plateau magnétique représenté au dessin comporte une semelle rectangulaire (1) surmontée d'un corps fixe (2) de forme générale parallélépipédique. Dans la forme de réalisation principalement décrite, et montrée aux figures 1 à 8 la semelle (1) est réalisée en un matériau amagnétique.

Le corps (2) du plateau magnétique comprend des pièces polaires en acier doux (3) toutes fixes, disposées en damier ou en quadrillage suivant des rangées longitudinales et transversales. Chaque pièce polaire (3), se présentant comme un bloc parallélépipédique de section horizontale carrée, repose par sa face inférieure directement sur la semelle amagnétique (1), tandis que sa face supérieure forme une petite portion de la face supérieure active du plateau magnétique.

Entre les rangées de pièces polaires (3), aussi bien dans la direction longitudinale que dans la direction transversale, sont prévus des entrefers amagnétiques (4) qui se croisent en formant une sorte de grille.

Les pièces polaires (3) situées en bordure du plateau magnétique sont apparentes sur les deux côtés longitudinaux du plateau où elles sont également séparées les unes des autres par des prolongements latéraux des entrefers (4). Les pièces polaires (3) ne sont pas apparentes aux deux extrémités du plateau magnétique, où sont prévues des pièces de fermeture (5, 6).

Entre les rangées transversales de pièces polaires (3), sous les entrefers (4) séparant ces rangées les unes des autres, sont insérés des aimants permanents fixes (7 et 8), en forme de pastilles circulaires de faible épaisseur, d'axe horizontal. Chaque aimant (7 ou 8) est placé entre deux pièces polaires (3) situées en vis-à-vis et appartenant à deux rangées transversales voisines.

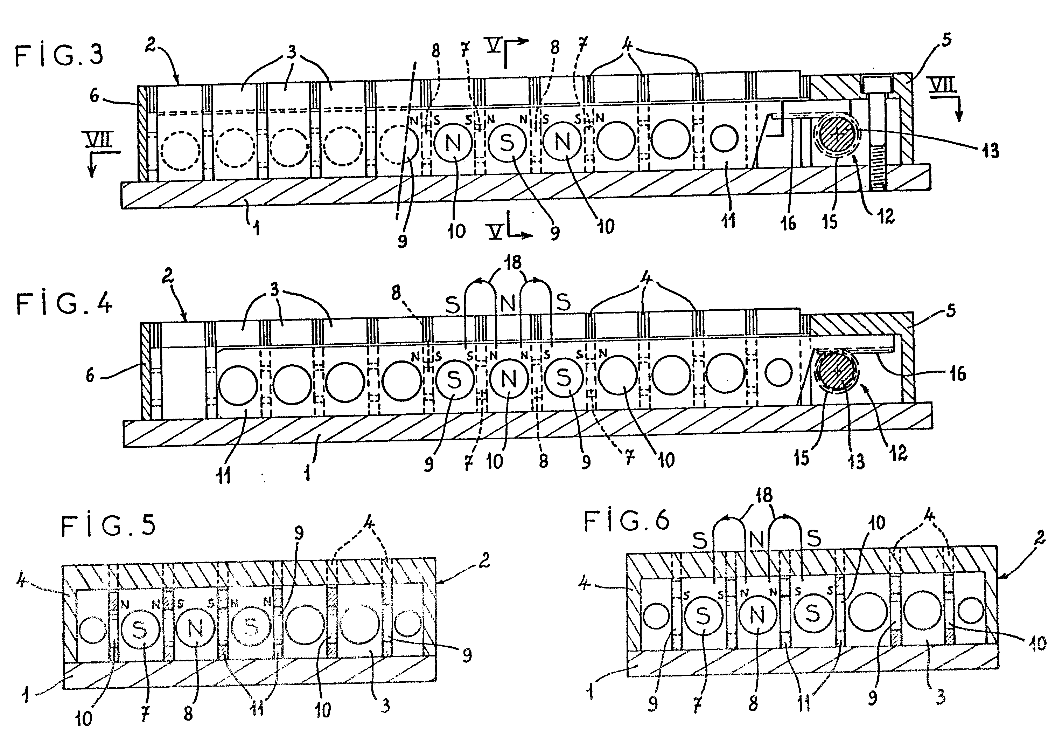

Dans chaque ligne d'aimants transversale, alternent des aimants permanents (7) tous aimantés suivant la direction longitudinale du plateau magnétique et dans un même sens, et des aimants permanents (8) tous aimantés également dans la direction longitudinale du plateau magnétique mais en sens inverse des aimants précédents (7). De plus, les pièces polaires de chaque rangée longitudinale sont séparées les unes des autres alternativement par des aimants permanents (7) aimantés dans un sens donné et par des aimants permanents (8) aimantés dans le sens opposé des précédents. Cette double alternance des polarités des aimants fixes (7 et 8), à la fois longitudinale et transversale, est bien illustrée aux figures 3 à 8.

Entre les rangées longitudinales de pièces polaires (3) sous les entrefers (4) subsistent des lames d'air verticales longitudinales dans lesquelles prennent place d'autres aimants permanents (9 et 10), portés par des peignes mobiles (11) en matériau amagnétique, montés coulissants dans ces lames d'air.

Chaque peigne (11) présente une série d'ouvertures circulaires, dans lesquelles sont insérés les aimants permanents mobiles (9 et 10), en forme de pastilles circulaires de faible épaisseur d'axe horizontal, le pas séparant ces aimants mobiles (9 et 10) étant égal au pas des pièces polaires (3). Dans chaque ligne d'aimants longitudinale correspondant, à un peigne (11), alternent des aimants permanents (9) tous aimantés suivant la direction transversale du plateau magnétique et dans un même sens, et des aimants permanents (10) tous aimantés également dans la direction transversale du plateau magnétique mais en sens inverse des aimants précédents (9).

Les différents peignes (11) sont tous déplaçables longitudinalement de manière simultanée, sur la longueur d'un pas polaire, à partir d'un même mécanisme de commande marche-arrêt (12) logé à une extrémité du plateau magnétique, sous l'une des pièces de fermeture (5). Dans la forme de réalisation ici décrite à titre d'exemple, le mécanisme de commande (12) comprend un arbre rotatif transversal (13), muni d'un levier de manœuvre extérieur (14) à l'une de ses extrémités, et comportant des dentures de pignon (15) régulièrement espacées sur sa longueur. Chaque denture de pignon (15) est en prise avec une crémaillère (16) formée à une extrémité d'un peigne (11) de telle sorte que le mouvement de rotation de l'arbre (13) provoque un déplacement en translation de l'ensemble des peignes (11). Le mécanisme de commande (12) est conçu par exemple, de telle sorte qu'une rotation d'un demi-tour du levier (14) et de l'arbre (13) correspond au déplacement sur la longueur d'un pas polaire de tous les peignes (11) donc de tous les aimants permanents mobiles (9 et 10).

Les différents peignes (11), étant ainsi couplés par l'intermédiaire du mécanisme de commande (12), occupent à tout moment des positions correspondantes, ce qui permet de distinguer des lignes d'aimants mobiles (9 et 10) non seulement longitudinales, mais aussi transversales. Dans chaque ligne d'aimants mobiles transversale également, alternent des aimants permanents (9) aimantés dans un sens donné et des aimants permanents (10) aimantés dans le sens opposé des précédents. Cette double alternance des polarités des aimants mobiles (9 et 10), à la fois longitudinale et transversale, est elle aussi bien illustrée aux figures 3 à 8.

Il est à noter que pour des raisons d'équilibrage des flux, les aimants permanents fixes (7 et 8) situés en bordure du plateau magnétique, de même que certains aimants permanents mobiles (9 et 10) placés à une extrémité des peignes (11) sont dimensionnés différemment, en étant notamment conformés toujours sous la forme de pastilles mais de diamètre inférieur à celui des autres aimants, comme le montre le dessin.

Les aimants permanents fixes (7 et 8) et mobiles (9 et 10) sont choisis avec une force coercitive élevée et sont, par exemple, des aimants au samarium-cobalt ayant une induction rémanente de 0,8 à 0,9 Tesla (8000 à 9000 gauss), et un champ magnétique de 98 à 113 Ampère/mètre (7800 à 9000 oersted).

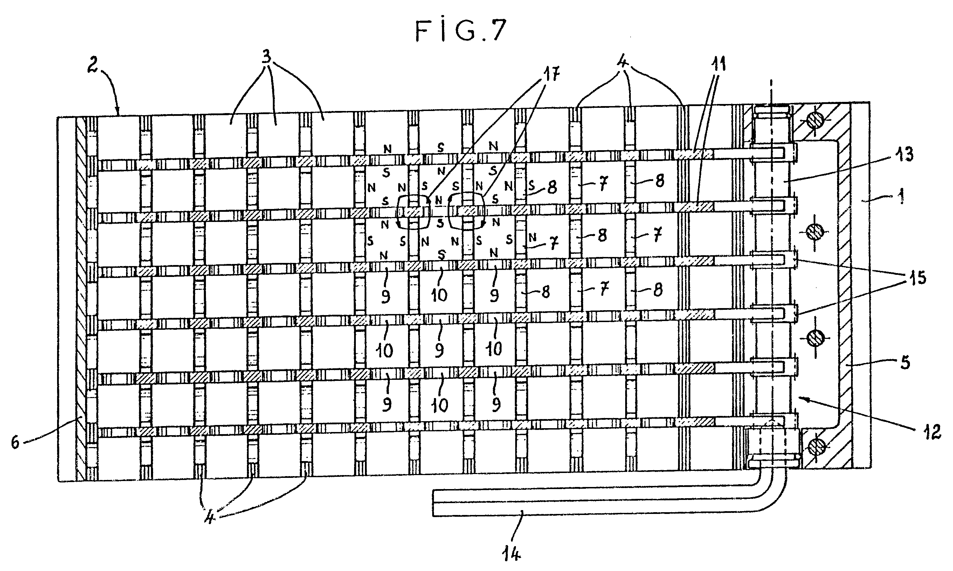

Les figures 3, 5 et 7 représentent le plateau magnétique dans sa position dite d'arrêt, pour laquelle tous les peignes (11) sont amenés le plus « à gauche », en se référant au dessin. Les aimants mobiles (9 et 10) sont alors positionnés, entre les pièces polaires (3) situées en vis-à-vis et appartenant à des rangées longitudinales voisines de telle sorte que chaque pièce polaire (3) reçoit, généralement sur ses quatre faces latérales, des polarités d'aimants Nord et Sud qui se compensent. Pour une pièce polaire (3) non située en bordure du plateau, deux faces latérales opposées sont situées en regard de polarités d'aimants Nord, et les deux autres faces latérales sont situées en regard de polarités d'aimants Sud — Voir notamment la figure 7. Toutes les lignes de force (17) du champ magnétique se referment ainsi à l'intérieur du corps (2) du plateau, et toutes les pièces polaires (3) apparaissent comme « neutres » sur la face supérieure du plateau. Bien qu'elles soient entourées seulement par trois aimants, les pièces polaires (3) situées en bordure du plateau magnétique sont elles aussi « neutres », compte tenu du dimensionnement particulier signalé plus haut pour certains aimants.

En déplaçant l'ensemble des peignes (11) sur la longueur d'un pas polaire vers « la droite », par référence au dessin, le plateau magnétique est amené dans sa position dite de marche illustrée par les figures 4, 6 et 8. Chaque aimant permanent mobile (9) prend alors la place occupée précédemment par un aimant permanent mobile (10) de polarité inverse, et vice-versa. Il en résulte que chaque pièce polaire (3) reçoit sur ses quatre faces latérales ou sur trois faces latérales dans le cas d'une pièce polaire située en bordure, des polarités d'aimants qui sont soit toutes Nord soit toutes Sud. Les pièces polaires (3) forment ensemble, vues par dessus, un damier de pôles alternativement Nord et Sud, qui rend la face supérieure du plateau active et lui permet d'attirer des pièces métalliques, au travers desquelles se referment alors les lignes de force (18) du champ magnétique — Voir notamment les figures 4 et 6. La semelle (1) étant amagnétique, il n'existe ici aucun risque de court-circuitage du flux magnétique.

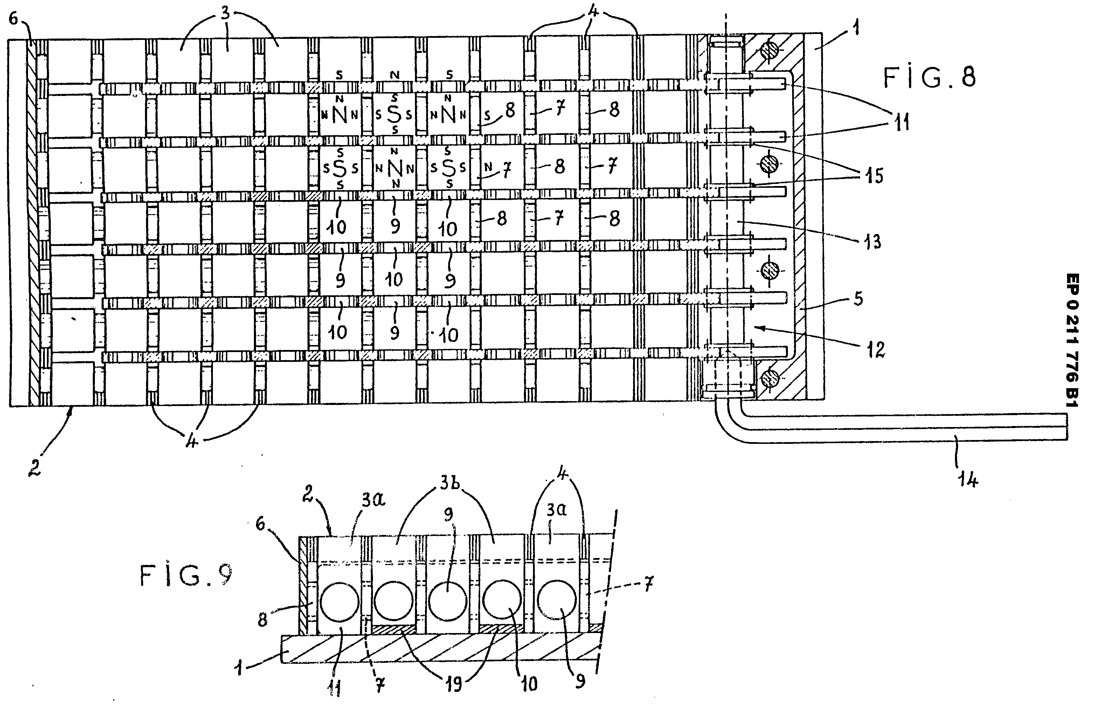

La figure 9 est relative à une variante de ce plateau magnétique, dans laquelle la semelle (1) est, au contraire de ce qui précède, réalisée en un matériau magnétique. Pour éviter dans ce cas le court-circuitage du flux magnétique toutes les pièces polaires (3a) qui, en position de marche, forment des pôles de même nom, par exemple des pôles Nord, reposent directement sur la semelle (1). Par contre toutes les autres pièces polaires (3b) qui en position de marche forment par exemple des pôles Sud sont isolées de la semelle (1) par des embases amagnétiques (19). Cette variante ne comporte aucune modification par rapport à la forme de réalisation principalement décrite, en ce qui concerne la disposition des aimants fixes et mobiles, et les éléments visibles sur la figure 9 sont désignés par les mêmes repères que les éléments correspondants des figures 1 à 8.

Comme il va de soi, l'invention ne se limite pas aux seules formes de réalisation de ce plateau magnétique à aimants permanents qui ont été décrites ci-dessus, à titre d'exemples ; elle en embrasse, au contraire, toutes les variantes respectant le même principe quels que soient notamment les formes et les matériaux constitutifs des aimants ou encore les détails de structure du mécanisme de commande marche-arrêt.

## Revendications

1. Plateau magnétique à aimants permanents, avec commande marche-arrêt comprenant au-dessus d'une semelle (1) un ensemble de pièces polaires (3) et d'entrefers (4) apparaissant à la surface du plateau un ensemble d'aimants permanents fixes (7, 8) aimantés dans une direction commune, et un ensemble d'aimants permanents mobiles (9, 10) aimantés perpendiculairement aux précédents, un mécanisme de commande (12) étant prévu pour déplacer en translation l'ensemble des aimants permanents mobiles (9, 10) sur la longueur du pas des pièces polaires (3), entre une position dans laquelle chaque pièce polaire (3) reçoit sur ses faces des polarités d'aimants de noms opposés, et une autre position dans laquelle chaque pièce polaire (3) reçoit sur ses faces de polarités d'aimants tous de même nom, faisant de chaque pièce polaire (3) un pôle actif Nord ou Sud, caractérisé en ce que :

a) les pièces polaires (3) toutes fixes, sont disposées en damier ou en quadrillage suivant des rangées longitudinales et transversales, séparées les unes des autres par les entrefers (4) ;

b) des aimants permanents (7, 8) formant un premier ensemble sont insérés sous les entrefers (4) entre les pièces polaires (3) situées en vis-à-vis et appartenant à deux rangées transversales voisines, tous ces aimants permanents (7, 8) étant aimantés suivant la direction longitudinale du plateau magnétique, avec une alternance de leurs polarités aussi bien longitudinalement que transversalement ;

c) d'autres aimants permanents (9, 10) formant un second ensemble sont insérés sous les entrefers (4) entre les pièces polaires (3) situées en vis-à-vis et appartenant à deux rangées longitudinales voisines, tous ces autres aimants permanents (9,10) étant aimantés suivant la direction transversale du plateau magnétique, également avec une alternance de leurs polarités aussi bien longitudinalement que transversalement ;

d) les aimants permanents (7, 8, 9, 10) sont aimantés parallèlement à la semelle (1).

2. Plateau magnétique à aimants permanents selon la revendication 1, caractérisé en ce que la semelle (1) est réalisée en un matériau amagnétique et en ce que toutes les pièces polaires (3) disposées en damier ou en quadrillage, reposent directement sur la semelle amagnétique (1).

3. Plateau magnétique à aimants permanents selon la revendication 1, caractérisé en ce que la semelle (1) est réalisée en un matériau magnétique et en ce que toutes les pièces polaires (3a) qui, en position de marche, forment des pôles actifs de même nom reposent directement sur la semelle magnétique (1), tandis que toutes les autres pièces polaires (3b), formant en position de marche des pôles actifs de nom opposé aux précédents, sont isolés magnétiquement (en 19) de la semelle (1).

4. Plateau magnétique à aimants permanents selon l'une quelconque des revendications 1 à 3, caractérisé en ce que les aimants permanents (7, 8, 9, 10), insérés entre les rangées longitudinales et transversales de pièces polaires (3), sont des aimants permanents en forme de pastilles circulaires, de faible épaisseur, dont les axes sont parallèles à la semelle (1).

5. Plateau magnétique à aimants permanents selon la revendication 4, caractérisé en ce que les aimants permanents (9, 10) en forme de pastilles circulaires, formant l'ensemble d'aimants permanents mobiles, sont portés par des peignes mobiles (11) en matériau amagnétique, logés et montés coulissants dans des lames d'air ménagées, sous les entrefers (4), entre les rangées longitudinales ou transversales de pièces polaires (3), tous les peignes (11) étant liés au mécanisme de commande (12) de manière à être déplacés simultanément au moyen de ce mécanisme.

6. Plateau magnétique à aimants permanents selon la revendication 5, caractérisé en ce que les différents peignes mobiles (11) sont couplés uniquement par l'intermédiaire du mécanisme de commande (12), lequel comprend un arbre rotatif (13) pourvu de moyens de manœuvre (14) et portant des dentures de pignon (15) en prise avec des crémaillères (16) formées à une extrémité des différents peignes (11).

## Claims

1. A magnetic plate chuck using permanent magnets, with on-off control, comprising, above a base (1), an assembly of pole pieces (3) and spacers (4) exposed at the surface of the plate, an assembly of fixed permanent magnets (7, 8) magnetised in a common direction, and an assembly of movable permanent magnets (9, 10) magnetised perpendicularly to those aforesaid, a control mechanism (12) being provided to displace the assembly of movable permanent magnets (9, 10) in translation along the pitch length of the pole pieces (3), between a position in which each pole piece (3) receives upon its faces polarities of magnets of opposite kinds, and another position in which each pole piece (3) receives on its faces polarities of magnets of the same kind, making each pole piece (3) an active north or south pole, characterised in that :

(a) the pole pieces (3), all fixed, are disposed in a check or squared pattern along longitudinal and transverse rows separated one from the other by the spacers (4) ;

(b) permanent magnets (7, 8) forming a first assembly are inserted under the spacers (4) between the opposed pole pieces (3) in two neighbouring transverse rows, all these permanent magnets (7, 8) being magnetised in the longitudinal direction of the magnetic plate chuck, with their polarities alternating both longitudinally and transversely, ;

(c) other permanent magnets (9, 10) forming a second assembly are inserted under the spacers (4) between the opposed pole pieces (3) in two neighbouring longitudinal rows, all these other permanent magnets (9, 10) being magnetised along the transverse direction of the magnetic plate chuck, also with their polarities alternating both longitudinally and transversely ;

(d) the permanent magnets (7, 8, 9, 10) are magnetised parallel to the base (1).

2. A magnetic plate chuck using permanent magnets according to Claim 1, characterised in that the base (1) is formed of an amagnetic material and in that all the pole pieces (3) disposed in a check or squared pattern, rest directly on the amagnetic base (1).

3. A magnetic plate chuck using permanent magnets according to Claim 1, characterised in that the base (1) is formed of a magnetic material and in that all the pole pieces (3a), which, in the on-position, form active poles of the same kind, rest directly on the magnetic base (1), while all the other pole pieces (3b), forming in the on-position active poles of a type opposite to the aforesaid, are isolated magnetically (at 19) from the base (1).

4. A magnetic plate chuck using permanent magnets according to any one of Claims 1 to 3, characterised in that the permanent magnets (7, 8, 9, 10) inserted between the longitudinal and transverse rows of pole pieces (3), are permanent magnets in the form of circular discs of small thickness, of which the axes are parallel to the base (1).

5. A magnetic plate chuck using permanent magnets according to Claim 4, characterised in that the permanent magnets (9, 10) in the form of circular discs forming the movable permanent magnet assembly, are carried by movable bars (11) of amagnetic material, housed and mounted slidably in air gaps formed, under the spacers (4), between the longitudinal or transverse rows of pole pieces (3), all the bars (11) being connected to the control mechanism (12) so as to be displaceable simultaneously by means of this mechanism.

6. A magnetic plate chuck using permanent magnets according to Claim 5, characterised in that the different movable bars (11) are coupled solely by way of the control mechanism (12), which includes a rotary shaft (13) provided with actuating means (14) and carrying pinion teeth (15) engaged with rack teeth (16) formed at the ends of the different bars (11).

**Patentansprüche**

1. Dauermagnetisches Spanngerät mit Steuervorrichtung zum Ein- und Ausschalten, beinhaltend oberhalb einer Fußplatte (1) eine Gesamtheit von Polstücken (3) und Eisenspalten (4), die auf der Oberfläche des Spanngerätes erscheinen, eine Gesamtheit von ortsfesten Dauermagneten (7, 8), magnetisiert in einer gemeinsamen Richtung, und eine Gesamtheit von beweglichen Dauermagneten (9, 10), magnetisiert senkrecht zu den vorhergehenden, einen Steuermechanismus (12) für die translatorische Verlagerung der Gesamtheit der beweglichen Dauermagnete (9, 10) über die Länge der Folge der Polstücke (3) zwischen einer Stellung, in der jedes Polstück (3) auf seinen Polflächen Magnete entgegengesetzter Benennung empfängt, und einer anderen Stellung, in der jedes Polstück (3) auf seinen Polflächen Magnete der gleichen Benennung empfängt, was aus jedem Polstück (3) einen aktiven Nordpol oder Südpol macht, dadurch gekennzeichnet, daß :

a) die Polstücke (3), alle ortsfest, schachbrettartig oder im Würfelmuster gemäß Längs- und Querreihen angeordnet sind, voneinander getrennt durch die Eisenspalte (4) ;

b) Dauermagnete (7, 8), die eine erste Gesamtheit bilden, unter den Eisenspalten (4) zwischen den gegenüberliegenden Polstücken (3) eingesetzt sind und zwei benachbarten Querreihen zugeordnet sind, wobei alle diese Permanentmagnete (7, 8) gemäß der Längsrichtung des Spanngerätes magnetisiert sind, mit einem Polwechsel sowohl längs wie quer ;

c) weitere Permanentmagnete (9, 10), die eine zweite Gesamtheit bilden, unter den Eisenspalten (4) zwischen die gegenüberliegenden Polstücke (3) eingesetzt sind, die zwei benachbarten Längsreihen zugeordnet sind, wobei alle diese Permanentmagnete (9, 10) gemäß der Querrichtung des Spanngerätes magnetisiert sind, ebenfalls mit einem Polwechsel sowohl längs wie quer ;

d) die Permanentmagnete (7, 8, 9, 10) parallel zu der Fußplatte (1) magnetisiert sind.

2. Dauermagnetisches Spanngerät nach Anspruch 1, dadurch gekennzeichnet, daß die Fußplatte (1) aus einem nichtmagnetischen Material besteht und daß alle Polstücke (3), schachbrett- oder würfelartig angeordnet, direkt auf der nichtmagnetischen Fußplatte (1) ruhen.

3. Dauermagnetisches Spanngerät nach Anspruch 1, dadurch gekennzeichnet, daß die Fußplatte (1) aus einem magnetischen Material besteht und daß alle die Polstücke (3a), die, in der Arbeitsstellung, aktive Pole gleicher Benennung bilden, direkt auf der magnetischen Fußplatte (1) ruhen, während alle die Polstücke (3b), die in der Arbeitsstellung aktive Pole entgegengesetzter Benennung zu den vorhergehenden bilden, magnetisch (bei 19) von der Fußplatte (1) isoliert sind.

4. Dauermagnetisches Spanngerät nach einem der Ansprüche 1 bis 3, dadurch gekennzeichnet, daß die Dauermagnete (7, 8, 9, 10), eingesetzt in die Längs- und Querreihen der Polstücke (3), Dauermagnete in Form kreisförmiger Pastillen geringer Dicke sind, deren Achsen parallel zur Fußplatte (1) liegen.

5. Dauermagnetisches Spanngerät nach Anspruch 4, dadurch gekennzeichnet, daß die Dauermagnete (9, 10) in Form kreisförmiger Pastillen, die die Gesamtheit der beweglichen Dauermagnete bilden, von beweglichen Kämmen (11) aus einem nichtmagnetischen Material getragen sind, untergebracht und gleitend montiert in Luftlamellen, die unter den Eisenspalten (4) zwischen den Längs- oder Querreihen der Polstücke (3) vorgesehen sind, wobei alle die Kämme (11) derart mit dem Steuermechanismus (12) verbunden sind, daß sie simultan mittels dieses Mechanismus verlagerbar sind.

6. Dauermagnetisches Spanngerät nach Anspruch 5, dadurch gekennzeichnet, daß die unterschiedlichen beweglichen Kämme (11) ausschließlich mittels des Betätigungsmechanismus (12) gekoppelt sind, welcher eine drehbare Welle (13) beinhaltet, die mit Betätigungsmitteln (14) versehen ist und die Ritzel (15) trägt, die mit Zahnstangen (16) in Eingriff stehen, die an einem Ende der verschiedenen Kämme (11) gebildet sind.

FIG.1

4

III

1

6

III

2

5

3

14

12

FIG.2

2

3

4

5

6

14

1

12

EP 0 211 776 B1

FIG.3

FIG.4

FIG.5

FIG.6

EP 0 211 776 B1

FIG.7

FIG.8

FIG.9